# EUROPÄISCHE PATENTANMELDUNG

(11) **EP 1 489 374 A1**
(43) Veröffentlichungstag der Anmeldung: **22.12.2004**
(21) Anmeldenummer: 04013450.4
(22) Anmeldetag: 08.06.2004
(51) Int. Cl.: F28D 20/00, F24H 9/12, F24D 11/00

(54) **Warmwasserspeicher, insbesondere Schichtladespeicher**

(30) Priorität: 20.06.2003 DE 10327696
(71) Anmelder: ROBERT BOSCH GMBH, 70442 Stuttgart (DE)
(72) Erfinder: Bruns, Joerg, 73230 Kirchheim (DE); Heinzelmann, Stefan, 71394 Kernen (DE)

(57) **Zusammenfassung**

Es wird ein Warmwasserspeicher, insbesondere ein Schichtladespeicher, vorgeschlagen, mit einem Speicherbehälter (10), in den ein Kaltwasserzuführrohr (51) und ein Warmwasserzuführrohr (52) münden und der an einen Ladekreis zur Erwärmung des Brauchwassers angeschlossen ist. Die Mündungsöffnung des Warmwasserzuführrohres (52) ist von einer warmwasserseitigen Strömungsführung (30) in Form einer Lochdose (31) und/oder die Mündungsöffnung des Kaltwasserzuführrohres (51) ist von einer kaltwasserseitigen Strömungsführung (40) in Form einer Schlitzdose (41) umgeben.

## Beschreibung

Die Erfindung betrifft einen Warmwasserspeicher, insbesondere einen Schichtladespeicher nach dem Oberbegriff des Anspruchs 1.

### Stand der Technik

Bekannte Schichtladespeicher bzw. Schichtenspeicher, die beispielsweise aus DE 83 10 135 U1 bekannt sind, weisen einen mit Wasser gefüllten Speicherbehälter auf, bei dem aufgrund der unterschiedlichen Dichte eine Schichtung zwischen dem sich im oberen Bereich des Speicherbehälters befindlichen warmen Wassers und dem sich im unteren Bereich befindlichen kalten Wassers entsteht. Zum Laden des Schichtenspeichers ist ein Ladekreis mit einer Umwälzpumpe vorgesehen, wobei das kühlere Wasser aus dem unteren Bereich des Schichtenspeichers zu einem Wärmetauscher gefördert wird, dort eine Erwärmung erfährt und das erwärmte Wasser wieder in den oberen Bereich des Speicherbehälters eingeleitet wird. Für den Verbrauch wird das warme Wasser dem Speicherbehälter im oberen Bereich als Brauchwasser entnommen und durch unten zugeführtes kaltes Wasser ersetzt.

Für eine optimale Funktion des Schichtladespeichers ist dabei eine stabile Temperaturschichtung auch beim Zapfen des Brauchwassers und Nachladens erforderlich. Aus der DE 38 35 096 C1 ist bereits ein Schichtenspeicher mit einem Speicherbehälter mit einer Warmwasserzuführung im oberen Abschnitt und einer Kaltwasserzuführung und Kaltwasserentnahmestelle im Bodenbereich bekannt. Die Warmwasserzuführung verfügt über eine Strömungsleiteinrichtung in Form eines Leitrohres, das das zugeführte Warmwasser des Ladekreises vermittels einer langgestreckten Eintrittszone in die Tiefe des Speicherbehälters bringt. An der Kaltwasserentnahmestelle bzw. Kaltwasserzuleitung im Bodenbereich des Speicherbehälters ist ein Wasserstutzen mit einer topfförmigen Strömungsbremseinrichtung versehen. Mit diesen Maßnahmen wird bezweckt, dass weitgehend nur laminare und turbulenzfreie Strömungen innerhalb des Speicherbehälters vorliegen und die Strömungsgeschwindigkeiten so begrenzt bleiben, dass die Strömung keine Injektorwirkung entwickelt, durch die kälteres Wasser in den oberen Speichervolumenbereich mitgerissen werden können oder umgekehrt heißes Wasser in den unteren Speichervolumenbereich gefördert werden könnte. Weder die Leiteinrichtung am Warmwassereinlass mittels des Leitrohres noch die Strömungsbremse am Kaltwassereinlass bzw. an der Kaltwasserentnahmestelle stellen sicher, dass eine radiale Komponente der Strömung das zugeführte Wasser gleichmäßig über den gesamten Umfang verteilt.

### Vorteile der Erfindung

Der erfindungsgemäße Warmwasserspeicher mit den kennzeichnenden Merkmalen des Anspruchs 1 hat den Vorteil, dass am Warmwassereinlass und oder am Kaltwassereinlass eine radiale Komponente der Strömung entsteht, die das zugeführte Warmwasser bzw. das zugeführte Kaltwasser gleichmäßig über den gesamten Umfang des Speicherbehälters in der entsprechenden Schichtebene verteilt. Durch die am Warmwassereinlass vorhandene Lochdose wird die kinetische Energie des einströmenden Warmwassers reduziert, so dass die vertikale Strömungskomponente des einströmenden Warmwassers weitestgehend eliminiert wird. Gleiches trifft für die am Kaltwassereinlass vorhandene Schlitzdose zu.

Weiterbildungen und Verbesserungen des erfindungsgemäßen Warmwasserspeichers gehen aus den Unteransprüchen hervor. Besonders vorteilhaft ist es, zur Vergleichmäßigung der Strömung am Warmwassereinlass zur Ausbildung einer vergleichmäßigten horizontalen Strömungskomponente eine doppelwandige Lochdose zur Strömungsführung einzusetzen. Weiter verbessert wird die Strömungswirkung über Querschnittsänderungen bzw. die Erzeugung von Prallströmungen, wobei dies dadurch erzeugt wird, dass sich die Löcher der inneren Lochdosen und der äußeren Lochdose versetzt zueinander angeordnet sind, so dass die Löcher der inneren Lochdose auf eine Wand der äußeren Lochdose zielen, wodurch eine Prallströmung vor Austritt durch die Löcher der äußeren Lochdose entsteht. Eine weitere Verbesserung der Strömungsführung innerhalb der inneren Lochdose kann mittels eines Strömungskegels erzeugt werden. Zur Erzeugung einer radialen Komponente der Strömung am Kaltwassereinlass ist es zweckmäßig, mindestens zwei horizontale Schlitze vorzusehen und zusätzlich mindestens einen Schlitz im Bodenbereich der Schlitz zum Boden des Speicherbehälters gerichtet vorzusehen. Dadurch wird eine radiale Komponente der Strömung erzeugt, die ausreicht, um eine bodennahe gleichmäßige Verteilung des kalten Wassers nach außen über den gesamten Querschnitt zu bewirken, die aber gleichzeitig nicht so stark ist, dass das Auftreten der radialen Strömung auf die Speicherbehälterwand eine erhöhte Vertikalströmung induziert. Wesentlich für die Vergleichmäßigung der Strömung im Bodenbereich ist, dass die Schlitzdose im Zentrum und bodennah angeordnet ist.

### Zeichnung

Ein Ausführungsbeispiel der Erfindung ist in der Zeichnung dargestellt und in der nachfolgenden Beschreibung näher erläutert.

Es zeigen:
- Figur 1: eine Prinzipdarstellung eines Brauchwasserkreises mit einem Schichtladespeicher,
- Figur 2: eine Schnittdarstellung durch einen Schichtladespeicher mit einer Strömungsführung am Warmwassereinlass,
- Figur 3: eine Schnittdarstellung durch einen Schichtladespeicher mit einer Strömungsführung am Kaltwassereinlass,
- Figur 4: eine Schnittdarstellung durch eine Strömungsführung am Warmwassereinlass,
- Figur 5: einen Schnitt nach der Linie V-V in Figur 4,
- Figur 6: eine Strömungsführung am Kaltwassereinlass und
- Figur 7: eine Schnittdarstellung nach der Linie VII-VII in Figur 6.

### Ausführungsbeispiele

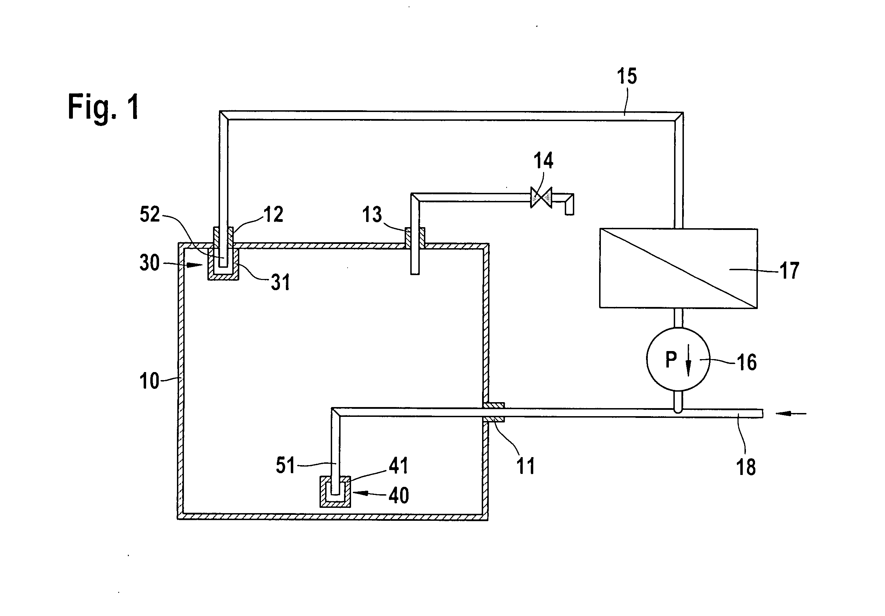

Das Brauchwassersystem gemäß Figur 1 weist einen Speicherbehälter 10 mit einem Kaltwasseranschluss 11 für ein Kaltwasserzuführrohr 51, einen Warmwasseranschluss 12 für ein Warmwasserzuführrohr 52 sowie einen Brauchwasseranschluss 13 auf. Der Brauchwasseranschluss 13 führt zu einer Brauchwasserzapfstelle 14. Der Warmwasseranschluss 12 und der Kaltwasseranschluss 11 sind in einen Ladekreis 15 mit einer Umwälzpumpe 16 und einem Wärmetauscher 17 eingebunden. Das in den Speicherbehälter 10 eingeführte Warmwasseranschlussrohr 52 ist an seiner Einmündung mit einer warmwasserseitigen Strömungsleiteinrichtung 30 und die Mündung des im Speicherbehälter mündenden Kaltwasserzufuhrrohres 51 mit einer kaltwasserseitigen Strömungsführung 40 versehen. Zwischen dem Kaltwasseranschluss 11 und der Ladepumpe 16 ist eine Kaltwasserzuleitung 18 eingeschleift.

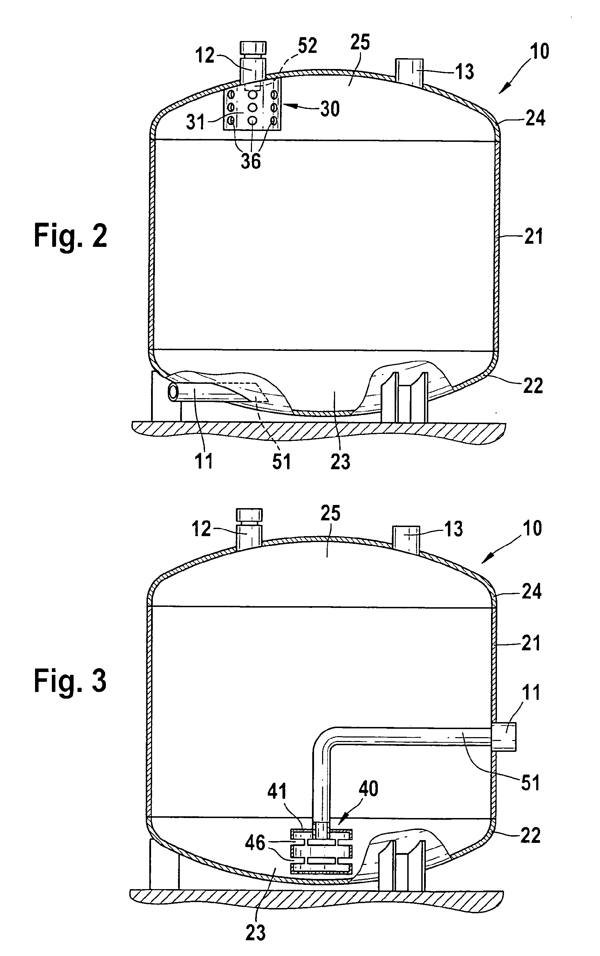

Die in den Figuren 2 und 3 dargestellten Speicherbehälter 10 weisen eine Zylinderwand 21, einen gewölbten Boden 22, der einen Bodenabschnitt 23 begrenzt, und einen gewölbten Deckel 24, der einen Deckenabschnitt 25 begrenzt, auf.

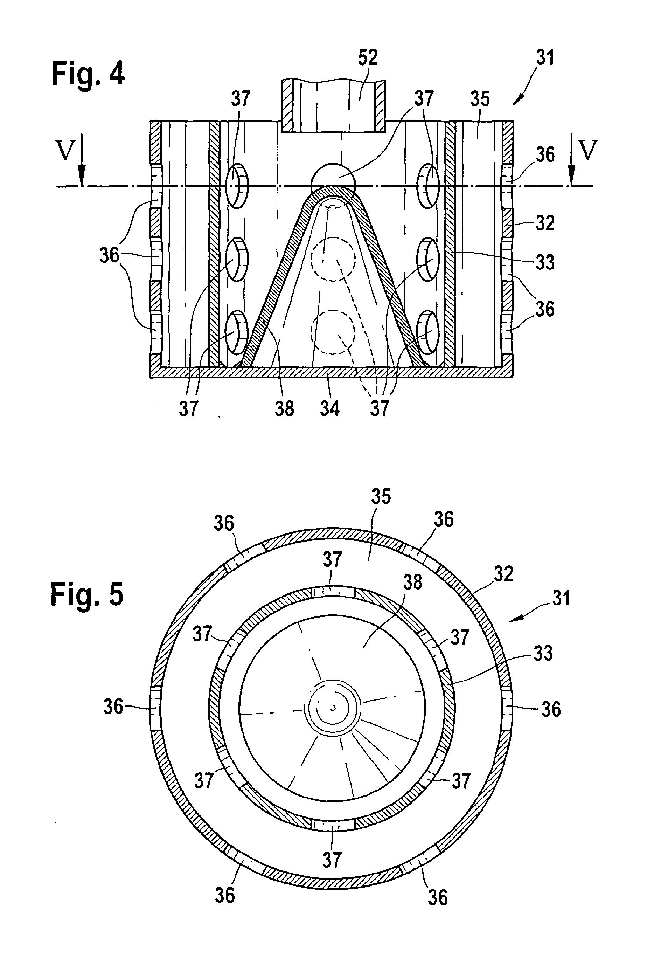

Figur 2 zeigt ein erstes Ausführungsbeispiel, bei dem das in den Deckenabschnitt 25 einmündende Warmwasserzuführrohr 52 am Warmwassereinlass von der warmwasserseitigen Strömungsführung 30 in Form einer Lochdose 31 umschlossen ist. Der Kaltwasseranschluss 11 mit dem Kaltwasserzuführrohr 51 mündet im Wesentlichen horizontal in den Bodenabschnitt 23. Eine zweckmäßige Ausführungsform einer warmwasserseitigen Strömungsführung 30 in Form einer Lochdose 31 geht aus Figur 4 und 5 hervor. Die Lochdose 31 ist dabei doppelwandig mit einer äußeren Zylinderwand als äußere Lochdose 32 und einer inneren Zylinderwand als innere Lochdose 33 und einem geschlossenen Boden 34 ausgeführt, wobei zwischen den Zylinderwänden der Lochdosen 32, 33 ein Ringspalt 35 entsteht. Das Warmwasserzuführrohr 52 mündet zentrisch in die innere Lochdose 33, wobei zweckmäßigerweise die Ebene der Mündungsöffnung des Warmwasserzuführrohres 52 unterhalb der Oberkante der Lochdose 31 liegt.

Die äußere Lochdose 32 weist beispielsweise in drei horizontalen Ebenen beispielsweise kreisrunde Strömungsöffnungen 36 und die innere Lochdose 33 ebenfalls in drei horizontalen Ebenen ebenfalls beispielsweise kreisrunde Strömungsöffnungen 37 auf. Im vorliegenden Ausführungsbeispiel liegen die Strömungsöffnungen 36 der äußeren Lochdose 32 und die Strömungsöffnungen 37 der inneren Lochdose 33 in der gleichen horizontalen Ebene. Wesentlich für die Wirkung der doppelwandigen Lochdose 31 ist, dass, wie die Schnittdarstellung in Draufsicht gemäß Figur 5 verdeutlicht wird, den Strömungsöffnungen 37 an der äußeren Lochdose 32 eine geschlossene Wandfläche der inneren Lochdose 33 gegenüberliegt, so dass eine Prallströmung beim Ausströmen durch die Strömungsöffnung 37 entsteht. Insofern sind die Strömungsöffnungen 36 in der äußeren Lochdose 32 und die Strömungsöffnungen 37 an der inneren Lochdose 33 radial versetzt zueinander angeordnet. Es ist darüber hinaus durchaus denkbar, die versetzte Anordnung der Strömungsöffnungen 36, 37 auch vertikal auszuführen. Darüber hinaus ist die Ausführung der Lochdose 31 nicht auf eine doppelwandige Ausführung begrenzt, sondern es sind weitere Ausführungsformen möglich, die mehr als zwei Zylinderwände mit Lochdosen mit entsprechend angeordneten Strömungsöffnungen nutzen. Die Strömungsführung kann mittels eines Strömungskegels 38 verstärkt werden, der zentrisch am Boden 34 der inneren Lochdose 33 angeordnet ist (Figur 4).

Neben der in Figur 4 und 5 aus zeichnerischen Gründen vereinfachten Darstellung der doppelwandigen Lochdose 31 ist eine Ausführungsform möglich, bei der beispielsweise acht Lochreihen mit drei bis vier Löchern gleichmäßig über den Umfang verteilt angeordnet sind, wobei die Strömungsöffnungen 36, 37 der inneren Lochdose 33 und der äußeren Lochdose 32 um beispielsweise 22,5° zueinander versetzt angeordnet sind. Strömungssimulation wurden mit einer doppelwandigen Lochdose 41 durchgeführt, bei der die innere Lochdose 33 einen Innendurchmesser von 36 mm, einen Außendurchmesser von 40 mm und einen Durchmesser der Strömungsöffnungen 37 von 8 mm hatte. Die Dosenhöhe betrug 50 mm. Die äußere Lochdose 32 hatte einen Innendurchmesser von 54 mm, einen Außendurchmesser von 60 mm und einen Durchmesser der Strömungsöffnungen 36 von 12 mm. Die Höhe der äußeren Lochdose betrug 60 mm. Ein weiterhin eingesetzter Prallkegel 38 hatte einen Sockeldurchmesser von 20 mm und einen Spitzendurchmesser von 10 mm. Sowohl in der äußeren Lochdose 32 als auch in der inneren Lochdose 33 waren acht Lochreihen mit drei bis vier Löchern gleichmäßig über den Umfang versetzt zueinander angeordnet.

Ein Ausführungsbeispiel für eine kaltwasserseitige Strömungsführung 40 geht aus Figur 3 hervor. Hierbei ist der Kaltwasseranschluss 11 durch eine Kaltwasserzuführung 51 beispielsweise durch die Zylinderwand 21 in das Innere des Speicherbehälters 10 und dort zentrisch in den Bodenabschnitt 23 geführt. Bei der kaltwasserseitigen Strömungsführung 40 in Figur 3 handelt es sich um eine Schlitzdose 41, in die das Kaltwasserzuführrohr 51 zentrisch mündet.

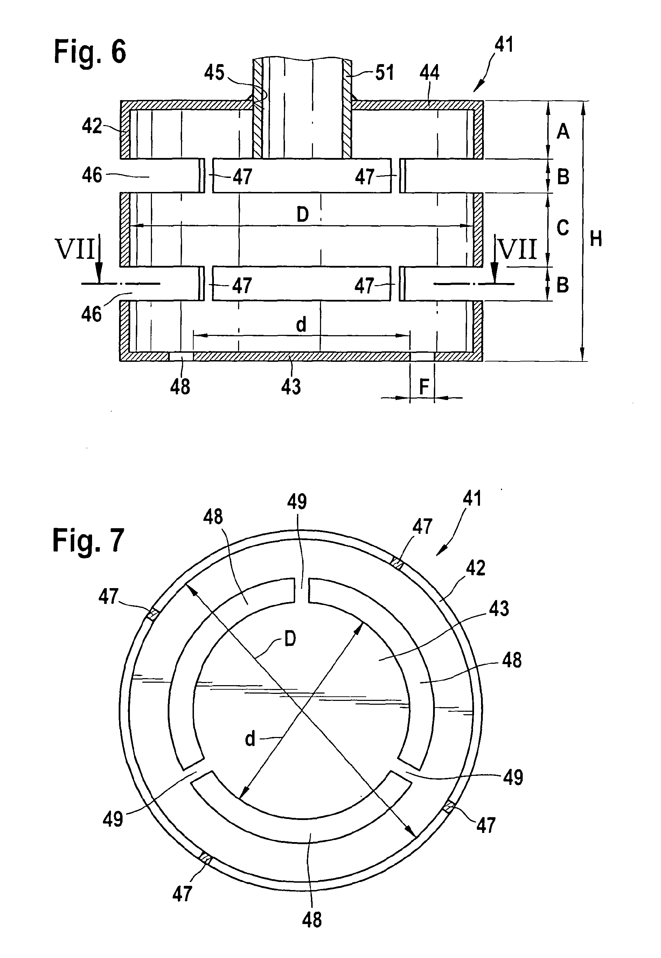

Ein Ausführungsbeispiel einer Schlitzdose 41 geht aus den Figuren 6 und 7 hervor. Hierbei ist die Schlitzdose 41 mit einer zylindrischen Seitenwand 42, einem ebenen Boden 43 und einer ebenen Deckfläche 44 ausgeführt. In der Deckfläche 44 befindet sich zentrisch angeordnet eine Einströmöffnung 45, an die das Kaltwasserzuführrohr 51 angebunden ist. In der Seitenwand 42 befinden sich beispielsweise zwei übereinander liegende horizontal verlaufende Schlitze 46, die über Verbindungsstege 47 gehalten werden. Im Boden 43 ist ferner ein konzentrisch angeordneter Ringspalt 48 ausgeführt, der mit weiteren Verbindungsstegen 49 gehalten wird. Bei der Ausführung der Schlitzdose 41 sind weitere Varianten denkbar, beispielsweise mit mindestens zwei Seitenwänden mit versetzt zueinander angeordneten Schlitzen und/oder eine Variation von Loch- und Schlitzdosen.

Eine zweckmäßige Ausführungsform der in Figur 6 und 7 dargestellten Schlitzdose weist dabei für einen Speicherbehälter 10 mit einem Speichervolumen von beispielsweise 83 l und einem Durchsatz von beispielsweise 20 l/min eine Schlitzdose 41 mit einem Innendurchmesser D von 47 mm und einer Höhe H von 35 mm auf, wobei die Schlitzdose 41 mit dem Boden 43 in einem Abstand von beispielsweise 5 mm vom Boden 43 des Speicherbehälters 10 beabstandet angeordnet ist. Die Schlitze 46 weisen eine Breite B von beispielsweise 5 mm und der Ringspalt 48 eine Breite F von beispielsweise 3 mm auf. Der innere Durchmesser d des Ringspaltes 48 beträgt dabei beispielsweise 27 mm. Der Abstand A des oberen Ringspaltes beträgt beispielsweise 7 mm und der Abstand C zwischen den beiden Ringspalten 46 beträgt 10 mm. Als zweckmäßig hat sich ferner herausgestellt, wenn sich die Mündungsöffnung des Kaltwasserzuführrohres 51 in der Ebene der oberen Kante des oberen Spaltes 46 befindet. Außerdem wurde für das Kaltwasserzuführrohr 51 eine innerer Durchmesser von 13 mm gewählt.

Neben den in Figur 2 und 3 beschriebenen Ausführungsbeispielen für eine warmwasserseitige Strömungsführung 30 und eine kaltwasserseitige Strömungsführung 40 schließt die Erfindung ebenfalls ein Ausführungsbeispiel ein, bei dem sowohl die warmwasserseitige Strömungsführung 30 mit einer Lochdose 31 gemäß Figur 2, 4 und 5 als auch die kaltwasserseitigen Strömungsführung 40 mit einer Schlitzdose 41 gemäß Figur 3, 6 und 7 ausgeführt sind.

### Bezugszeichenliste

- 10: Speicherbehälter
- 11: Kaltwasseranschluss
- 12: Warmwasseranschluss
- 13: Brauchwasseranschluss
- 14: Brauchwasserzapfstelle
- 15: Ladekreis
- 16: Ladepumpe
- 17: Wärmetauscher
- 18: Kaltwasserzuleitung
- 21: Zylinderwand
- 22: Boden
- 23: Bodenabschnitt
- 24: Deckel
- 25: Deckenabschnitt
- 30: warmwasserseitige Strömungsführung
- 31: Lochdose
- 32: äußere Lochdose
- 33: innere Lochdose
- 34: Boden
- 35: Ringspalt
- 36: äußere Strömungsführung
- 37: innere Strömungsführung
- 38: Prallkegel
- 40: kaltwasserseitige Strömungsführung
- 41: Schlitzdose
- 42: Seitenwand
- 43: Boden
- 44: Deckfläche
- 45: Einströmöffnung
- 46: Schlitz
- 47: Verbindungsstege
- 48: Ringspalt
- 49: weitere Verbindungsstege
- 51: Kaltwasserzuführrohr
- 52: Warmwasserzuführrohr

## Patentansprüche

**1.** Warmwasserspeicher, insbesondere Schichtladespeicher, mit einem Speicherbehälter (10), in dessen Bodenabschnitt (23) mindestens ein Kaltwasserzuführrohr (51) und in dessen Deckenabschnitt (25) mindestens ein Warmwasserzuführrohr (52) mündet und der an einen Ladekreis (15) zur Erwärmung des Brauchwassers angeschlossen ist, wobei das in den Speicherbehälter (10) mündende Kaltwasserzuführrohr (51 ) und/oder das in den Speicherbehälter mündende Warmwasserzuführrohr (52) mit einer Strömungsführung versehen ist, **dadurch gekennzeichnet, dass** die warmwasserseitige Strömungsführung (30) als Lochdose (31) und/oder die kaltwasserseitige Strömungsführung (40) als Schlitzdose (41) ausgeführt ist.

**2.** Warmwasserspeicher nach Anspruch 1, **dadurch gekennzeichnet, dass** die Lochdose (31) eine äußere Lochdose (32) mit äußeren Strömungsöffnungen (36) und mindestens eine innere Lochdose (33) mit inneren Strömungsöffnungen (37) aufweist und dass die äußeren Strömungsöffnungen (36) und die inneren Strömungsöffnungen (37) versetzt zueinander angeordnet sind.

**4.** Warmwasserspeicher nach Anspruch 2, **dadurch gekennzeichnet, dass** die innere Strömungsöffnung (37) derart in Bezug zur äußeren Strömungsöffnung (36) angeordnet ist, dass die innere Strömungsöffnung (37) in Richtung einer geschlossenen Wand der benachbarten Lochdose weist.

**5.** Warmwasserspeicher nach Anspruch 3 oder 4, **dadurch gekennzeichnet, dass** die äußere Lochdose (32) und/oder die inneren Lochdose (33) mindestens zwei übereinander liegende Lochkreise aufweist.

**6.** Warmwasserspeicher nach einem der Ansprüche 3 bis 5, **dadurch gekennzeichnet, dass** die Lochdose (31) einen geschlossenen Boden aufweist.

**7.** Warmwasserspeicher nach einem der Ansprüche 3 bis 6, **dadurch gekennzeichnet, dass** innerhalb der Lochdose (31) ein Prallkegel (38) angeordnet ist, der mit seiner Spitze in das Zentrum der Einströmöffnung des Warmwasserzuführrohres (52) weist.

**8.** Warmwasserspeicher nach Anspruch 1, **dadurch gekennzeichnet, dass** die kaltwasserseitige Strömungsführung (40) eine Schlitzdose (41) mit mindestens zwei übereinander liegenden horizontalen, die Schlitzdose (41) im Wesentlichen umschließenden Schlitzen (46) ausgeführt ist.

**9.** Warmwasserspeicher nach Anspruch 8, **dadurch gekennzeichnet, dass** die Schlitzdose (41) einen Boden (43) aufweist, in dem mindestens ein Ringspalt (48) ausgebildet ist.

**10.** Warmwasserspeicher nach Anspruch 8 oder 9, **dadurch gekennzeichnet, dass** sich die Mündungsöffnung des Kaltwasserzuführrohres (51) in der Ebene der oberen Kante des oberen Schlitzes befindet.

**11.** Warmwasserspeicher nach einem der Ansprüche 8 bis 10, **dadurch gekennzeichnet, dass** die Breite des Ringspaltes (48) kleiner ist, als jeweils die Breite der Schlitze (46)
